# EUROPÄISCHE PATENTANMELDUNG

(11) **EP 1 571 066 A2**
(43) Veröffentlichungstag der Anmeldung: **07.09.2005**
(21) Anmeldenummer: 05002859.6
(22) Anmeldetag: 11.02.2005
(51) Int. Cl.: B62D 3/12

(54) **Druckstück für Kraftfahrzeug-Zahnstangenlenkung**

(30) Priorität: 05.03.2004 DE 102004010819
(71) Anmelder: INA-Schaeffler KG, 91074 Herzogenaurach (DE)
(72) Erfinder: Osterlänger, Jürgen, 91448 Emskirchen (DE); Zernickel, Alexander, 91074 Herzogenaurach (DE); Kraus, Manfred, Dr., 91074 Herzogenaurach (DE); Willared, Stefan, 91352 Pautzfeld (DE); Münck, Horst, 91074 Herzogenaurach (DE)

(57) **Zusammenfassung**

Eine Zahnstange (13) für eine Zahnstangenlenkung für ein Kraftfahrzeug zeichnet sich dadurch aus, dass deren Tragflächen (13.3,13.4) als innerhalb der kreisförmigen Zahnstange (13) liegenden Ausnehmung (13.2) ausgebildet sind, wobei an diesen Tragflächen (13.3,13.4) wälzgelagerte Führungsrollen (19,25) mit korrespondierenden Tragflächen anliegen.

## Beschreibung

### Anwendungsgebiet der Erfindung

Die Erfindung betrifft eine Zahnstangenlenkung für ein Kraftfahrzeug, mit einem Lenkgehäuse, in dem eine Zahnstange längsverschieblich gelagert ist, sowie einem mit der Zahnstange kämmenden Ritzel und einem Druckstück, das auf einer einer Eingriffsseite mit dem Ritzel gegenüberliegenden Seite der Zahnstange angeordnet ist und mit Hilfe einer Feder in axialer Richtung gegen die Zahnstange vorgespannt ist, wobei das Druckstück in seinem Inneren eine der Kontur der Zahnstange angepaßte, drehbare Führungsrolle mit einer Tragfläche aufweist, an der die Zahnstange mit einer korrespondierenden Tragfläche anliegt, wobei die Tragflächen zueinander so angeordnet sind, dass ein Verdrehen der Zahnstange in Umfangrichtung verhindert ist.

### Hintergrund der Erfindung

Derartige Zahnstangenlenkungen sind aus dem Stand der Technik seit längerem vorbekannt. Bei diesen Lenkungen wird die Zahnstange in Längsrichtung verschiebbar in einem Lenkgehäuse geführt. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, indem ein gegenüber dem Ritzel an der Zahnstange anliegendes Druckstück unter Federvorspannung die Zahnstange gegen das Ritzel drückt. Das Druckstück muß dabei zum einen die erforderliche Anpreßkraft übertragen können und zum anderen eine Lagerfläche bieten, die bei der Verschiebung der Zahnstange auf dem Druckstück keine nennenswerten Reibkräfte und keinen wesentlichen Verschleiß hervorruft. Wird nun die über das Ritzel von der Hand des Fahrers aufgebrachte Lenkkraft durch einen Kugelgewindetrieb verstärkt, so wird durch die Momentübertragung die Zahnstange versucht sein, sich über ihre axiale Länge in Umfangsrichtung zu verdrehen. Dies versucht man dadurch zu verhindern, indem die Tragflächen von Führungsrolle und Zahnstange so zueinander angeordnet sind, dass sie sich einem Verdrehen der Zahnstange entgegen stellen.

Eine derartige Zahnstangenlenkung ist aus der DE 82 03 943 U bekannt. Wie Figur 5 dieser Vorveröffentlichung zeigt, weist die Zahnstange zwei Tragflächen auf, die symmetrisch gegen die Verzahnungsebene geneigt sind. Zur Zahnstangenlenkung gehört weiter eine Führungsrolle, die in einem Druckstück angeordnet ist und ebenfalls zwei Tragflächen aufweist. Die Tragflächen der Zahnstange werden durch spanenden Materialabtrag der im Ausgangszustand runden Zahnstange erzeugt. Die Tragflächen der Führungsrolle werden durch zwei im Druckstück angeordnete Außenringe eines Kugellagers gebildet, deren Mantelflächen, die die Tragflächen bilden, ebenfalls symmetrisch geneigt gegenüber der Verzahnungsebene angeordnet sind. Es liegt auf der Hand, dass durch eine solche Stellung der Tragflächen von Zahnstange und Führungsrolle ein Verdrehen der Zahnstange in Umfangsrichtung verhindert ist.

Nachteilig dabei ist die aufwendige Ausgestaltung der Tragflächen von Zahnstange und Führungsrolle. Zum einen ist die spanende Bearbeitung der Zahnstange aufwendig und damit teuer, weil ein erheblicher Materialanteil abzutragen ist. Zum anderen ist das Druckstück sehr kompliziert aufgebaut und damit ebenfalls kostenaufwendig. So müssen zwei Kugellager über je einen Bolzen im Druckstück untergebracht werden, was große Anforderungen an die Montage stellt und darüber hinaus zusätzlichen Bauraum beansprucht.

### Zusammenfassung der Erfindung

Ausgehend von den Nachteilen des bekannten Standes der Technik ist es daher Aufgabe der Erfindung, eine wesentlich vereinfachte Zahnstangenlenkung mit Druckstück bereit zu stellen, die sich einfach fertigen lässt und Drehmomente, Radial- und Axialkräfte bei einer hohen Tragfähigkeit sicher aufnehmen kann.

Erfindungsgemäß wird diese Aufgabe nach dem kennzeichnenden Teil von Anspruch 1 in Verbindung mit dessen Oberbegriff dadurch gelöst, daß die Tragfläche der Zahnstange als eine innerhalb der kreisförmigen Zahnstange liegende Ausnehmung ausgebildet ist. Im Sinne der Erfindung soll dabei verstanden werden, dass im unteren Teil der Zahnstange, also im Bereich der Führungsrolle, deren Kreislinie oder Peripherie nur sehr geringfügig unterbrochen ist.

Dabei ist von Vorteil, dass die als Tragfläche dienende Ausnehmung durch einen einfachen spangebenden Prozess, beispielsweise durch Fräsen, in die Zahnstange eingearbeitet werden kann. Das runde Querschnittsprofil der Zahnstange bleibt dabei im wesentlichen erhalten. Es ist also gemäß dem bisherigen Stand der Technik nicht mehr erforderlich, zur Herstellung der Tragflächen Unmengen von Material spanend abzutragen.

Weitere vorteilhafte Ausgestaltungen der Erfindung sind in den Unteransprüchen beschrieben.

So geht aus den Ansprüchen 2 und 3 hervor, daß die Tragfläche der Zahnstange halbkreisförmig oder V-förmig ausgebildet sein soll. Beide Ausführungsvarianten stehen gleichberechtigt nebeneinander und lassen sich aufgrund ihrer unkomplizierten geometrischen Querschnittsform auch in einfacher Weise in die Zahnstange einbringen.

Nach einem weiteren Merkmal der Erfindung gemäß Anspruch 4 ist vorgesehen, daß die Führungsrolle über zwei in axialer Richtung voneinander beabstandete Schrägwälzlager gehalten ist, wobei diese gemäß Anspruch 5 als Schrägnadellager ausgebildet sein sollen, die zueinander in O- oder X-Anordnung angestellt sind. Durch diese gegeneinander angestellten Schrägwälzlager lassen sich sowohl Radial- als auch Axialkräfte und auch Drehmomente sicher aufnehmen.

Nach einem weiteren Merkmal der Erfindung gemäß Anspruch 6 soll die Führungsrolle als ein rotationssymmetrischer Körper ausgebildet sein, der zu seiner Rotationsachse symmetrisch geneigte Tragflächen aufweist, deren Verlängerungen sich in einem radial außen liegenden Punkt treffen.

Nach einem weiterer Merkmal gemäß Anspruch 7 soll das Druckstück zweiteilig ausgebildet sein und entweder durch eine Befestigungsschraube oder durch einen Befestigungsstift zusammengehalten sein. Im Sinn der Erfindung ist dabei unter Befestigungsschraube ein Verbindungselement zu sehen, das von außen eingesetzt ist, während ein Verbindungsstift von innen eingeführt ist.

Nach einem anderen Merkmal der Erfindung soll das Druckstück aus einem Kunststoff hergestellt sein. Derartige Druckstücke haben zu einen ein spezifisch leichteres Gewicht und weisen zu anderen auch relativ gute Gleiteigenschaften in einer sie umgebenden Aufnahmebohrung auf.

Ist ein solches Druckstück aus Kunststoff gefertigt, so kann es gemäß Anspruch 9 zweckmäßig sein, dass beide Hälften des Druckstückes eine Laufbahn für die voneinander beabstandeten Schrägwälzlager in Form eines Einlegeteils bilden.

Aus Anspruch 10 geht eine andere Art einer Führungsrolle hervor, die als ein zweiteiliger rotationssymmetrischer Körper ausgebildet ist, der zu seiner Rotationsachse symmetrisch geneigte Tragflächen aufweist, deren Verlängerungen sich in einem radial innen liegenden Punkt treffen, wobei der zweiteilige rotationssymmetrisch ausgebildete Körper konzentrisch von einem Außenring umschlossen, der korrespondierende, ebenfalls zur Rotationsachse symmetrisch geneigte Tragflächen aufweist.

Gemäß Anspruch 11 ist zu dieser zweiteiligen rotationssymmetrisch ausgebildeten Führungsrolle in vorteilhafter Weise beidseitig ein Federelement angeordnet, das dieses mit einer axialen Kraft beaufschlagt. Auf diese Weise lässt sich die gewünschte Lagervorspannung unkompliziert einstellen.

Schließlich soll nach einem letzten Merkmal der Erfindung gemäß Anspruch 12 das Druckstück an seiner Mantelfläche mit einer umlaufenden Ausnehmung versehen sein, in die ein O-Ring eingesetzt ist.

Die Erfindung wird an nachstehenden Ausführungsbeispielen näher erläutert.

### Kurze Beschreibung der Zeichnungen

Es zeigen:
- Figur 1, 2 und 3: einen Längsschnitt durch ein erfindungsgemäß ausgestaltetes Druckstück mit Zahnstange,
- Figur 4: eine Draufsicht auf ein Druckstück gemäß Figur 3 und
- Figur 5: einen Längsschnitt durch ein Druckstück mit Zahnstange nach dem bisherigen Stand der Technik

### Ausführliche Beschreibung der Zeichnungen

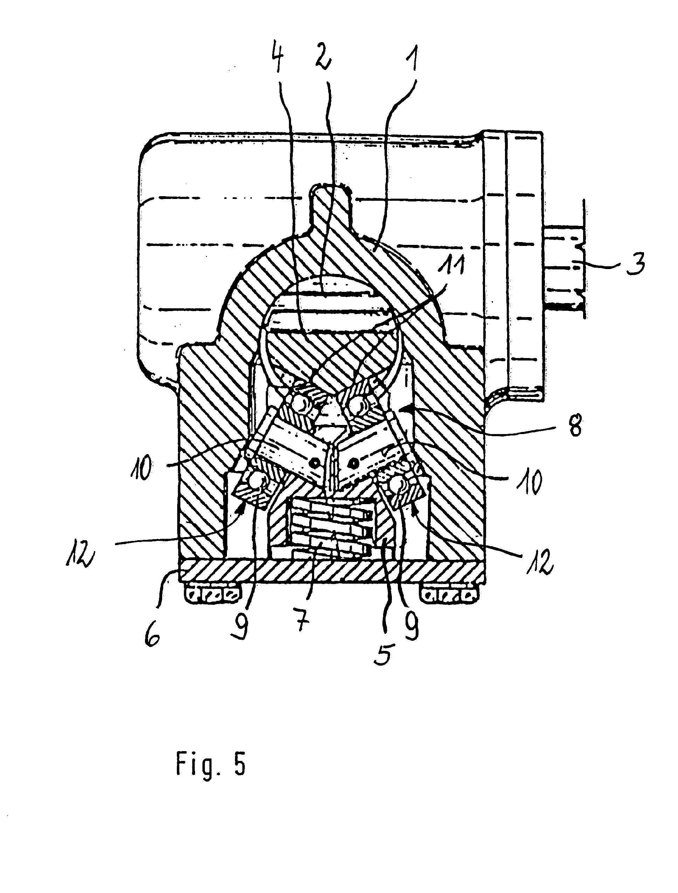

Zur Darstellung des Gesamtzusammenhanges sei zunächst auf den Stand der Technik gemäß Figur 5 verwiesen. Diese zeigt ein Gehäuse 1, in dem ein Ritzel 2, das in eine Lenkspindel 3 übergeht, gelagert ist. In die Verzahnung des Ritzels 2 greift die Verzahnung einer Zahnstange 4 ein, die quer zum Ritzel 2 verläuft. Auf der der Eingriffsseite des Ritzels 2 mit der Zahnstange 4 gegenüberliegenden Seite der Zahnstange 4 ist ein Druckstück 5 angeordnet, das die vom Ritzel 2 auf die Zahnstange 4 übertragene Kraft im wesentlichen abstützt. Das Druckstück 5 ist in einer nicht bezeichneten Aufnahmebohrung des Gehäuses 1 untergebracht. Es wird von einer zwischen dem Druckstück 5 und einem starr mit dem Gehäuse 1 verbundenen Deckel 6 angeordneten Feder 7 in Richtung auf die Zahnstange 4 vorgespannt.

Im Druckstück 5 ist eine Führungsrolle 8 untergebracht, die aus zwei als Rillenkugellager ausgebildeten Wälzlagern 9 besteht, die auf je einer Tragachse 10 gehalten sind. Die Tragachsen 10 und damit die Wälzlager 9 sind unter einem bestimmten Winkel zur Verzahnungsebene angeordnet, so dass die schräg gestellten Lageraußenringe der Wälzlager 9 mit ihren Tragflächen 12 an den mit 11 bezeichneten Tragflächen der Zahnstange 4 anliegen. Es liegt auf der Hand, dass sich die Zahnstange 4 in Umfangsrichtung nicht bewegen kann, falls ein Moment, beispielsweise durch einen Kugelgewindetrieb, aufgebracht würde.

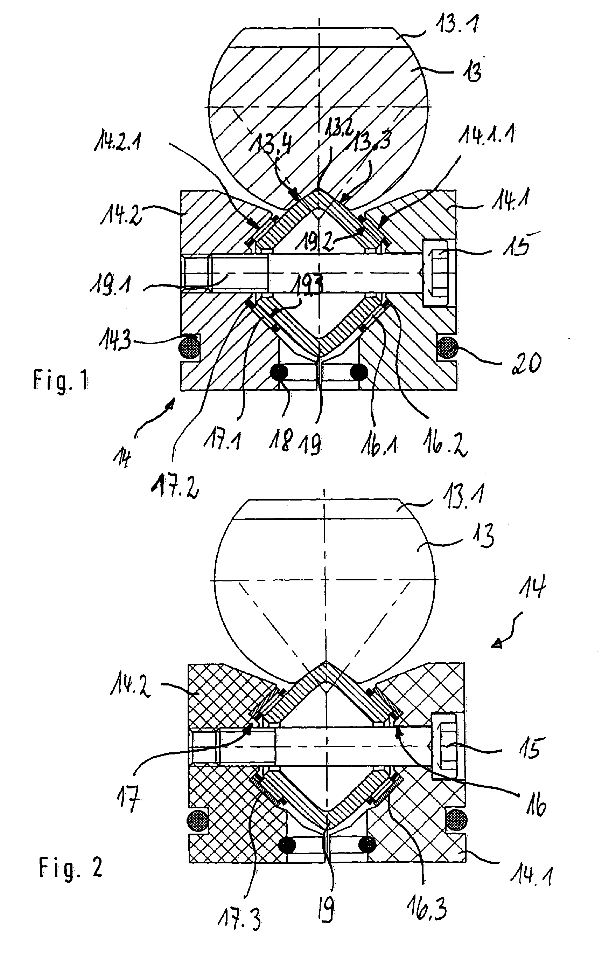

In Figur 1 ist eine erfindungsgemäßes Anordnung von einem Druckstück 14 und einer Zahnstange 13 gezeigt, wobei nach bekanntem Stand der Technik die Zahnstange 13 an ihrer vom Druckstück 14 abgewandten Seite mit einer Verzahnung 13.1 versehen ist, in die ein nicht dargestelltes Ritzel eingreift. An ihrer der Verzahnung 13.1 gegenüberliegenden Seite weist die Zahnstange 13 eine Ausnehmung 13.2 auf, die im Ausführungsbeispiel V-förmig ausgebildet ist, so dass zwei Tragflächen 13.3, 13.4 gebildet sind, die symmetrisch zur Verzahnung 13.1 geneigt sind. Das Druckstück 14 besteht aus den beiden Hälften 14.1, 14.2, die durch eine Befestigungsschraube 15 zusammengehalten sind. Im Druckstück 14 ist die Führungsrolle 19 drehbar gelagert, wobei deren Rotationsachse 19.1 gleichzeitig die Mittenachse der Befestigungsschraube 15 ist. Die Führungsrolle 19 ist als ein rotationssymmetrischer Körper ausgebildet, der zu seiner Rotationsachse 19.1 symmetrisch zueinander geneigte Tragflächen 19.2, 19.3 aufweist, die sich in einem radial außen liegenden Punkt vereinen. Wie die Figur weiter erkennen lässt, weist die Führungsrolle 19 in ihrer Mitte den größten Durchmesser auf, der kontinuierlich in beiden axialen Richtung abfällt. Die Führungsrolle 19 ist im Druckstück 14 über die beiden voneinander beabstandeten Schrägnadellager 16, 17 drehbar gehalten, wobei die Lagernadeln 16.1, 17.1 in je einem Käfig 16.2, 17.2 geführt sind. Die Laufbahnen der Schrägnadellager 16, 17 sind einerseits von den Tragflächen 19.2, 19.3 der Führungsrolle 19 und andererseits von den ebenfalls symmetrisch zueinander geneigt verlaufenden Flächen 14.1.1, 14.2.1 der Druckstückhälften 14.1, 14.2 gebildet. Die Schrägnadellager 16, 17 sind zueinander in X-Anordnung angestellt, d. h., ihre Drucklinien verlaufen schräg von außen nach innen in Richtung Mittelpunkt der Führungsrolle 19. Zur Anordnung gehört weiter eine Feder 18, die das Druckstück 14 gegen die Zahnstange 13 andrückt, sowie ein O-Ring 20, der in einer Nut 14.3 des Druckstückes 14 angeordnet ist. Wird nun über ein nicht dargestelltes Ritzel die Zahnstange 13 seitlich verschoben, so stützt sie sich auf der Führungsrolle 19 ab, die dadurch um die sie durchdringende Befestigungsschraube 15 in Rotation versetzt wird, wobei die Abstützung über die beiden Schrägnadellager 16, 17 realisiert ist.

Wie die Figur 1 weiter erkennen lässt, kann eine gewünschte Lagervorspannung eingestellt werden, indem durch Anziehen der Befestigungsschraube 15 die beiden Hälften 14.1, 14.2 des Druckstückes 14, und damit die Tragflächen 19.2, 19.3 und die Laufbahnen 14.1.1, 14.2.1, aufeinander zu bewegt werden.

Auf diese Weise ist eine aus Druckstück 14 und Zahnstange 13 bestehende Einheit geschaffen, die sich durch folgende Vorteile auszeichnet:
- kostengünstige Herstellung und Montage
- geringe Verlustreibung und hohe Laufruhe
- sichere Aufnahme von axialen- und radialen Kräften und von einwirkenden Drehmomenten
- hohe Tragfähigkeit

Das in Figur 2 gezeigte Druckstück 14 unterscheidet sich von dem in Figur 1 gezeigten lediglich dadurch, dass die Laufbahnen 14.1.1, 14.2.1 nicht von den beiden Hälften 14.1, 14.2 des Druckstückes 14 gebildet werden, sondern durch Einlegeteile in Form von metallischen Laufscheiben 16.3, 17.3. Diese werden insbesondere dann zur Anwendung kommen, wenn das Druckstück 14 aus einem nichtmetallischen Material, beispielsweise aus einem Kunststoff, gefertigt ist.

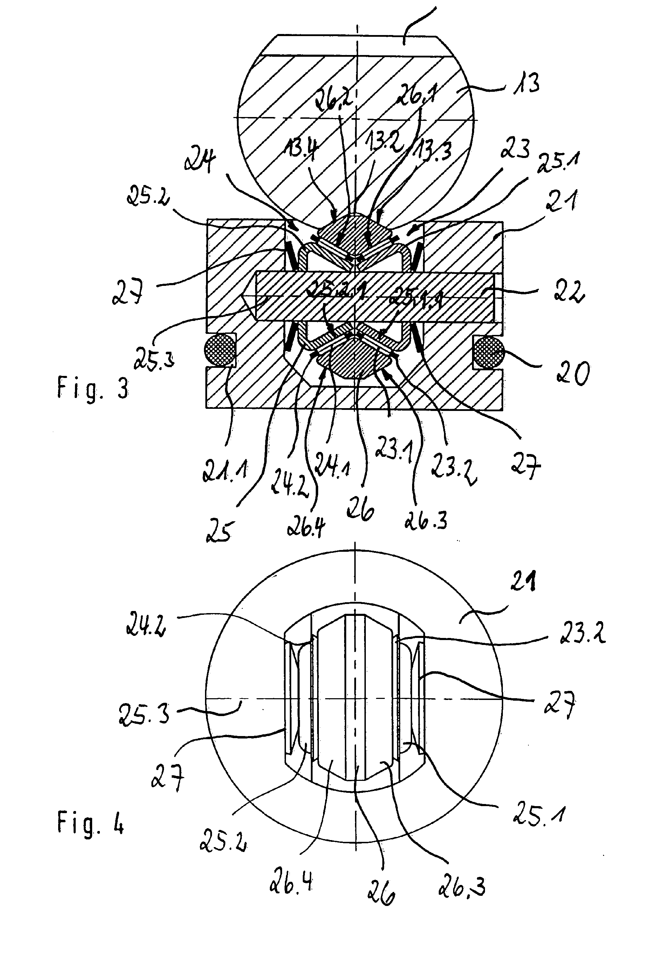

Das in den Figuren 3 und 4 mit der Bezugszahl 21 versehene Druckstück ist einteilig ausgebildet und weist eine Führungsrolle 25 auf, die mittels Befestigungsstift 22 innerhalb des Druckstückes 21 gehalten ist. Diese ist zweiteilig ausgebildet und besteht aus den beiden Teilen 25.1, 25.2, deren Tragflächen 25.1.1, 25.2.1 symmetrisch zueinander geneigt sind und sich in einem radial innen liegenden Punkt treffen. Anders ausgedrückt, die Führungsrolle 25 nimmt in ihrem Durchmesser von außen nach innen ab. Zum Druckstück 21 gehört auch der Außenring 26, der ein prismatisches Profil aufweist, das einerseits den Tragflächen 13.3, 13.4 der Zahnstange 13 und anderseits den Tragflächen 25.1.1, 25.2.1 der Teile 25.1, 25.2 angepasst ist. Auf diese Weise sind innere und äußere Tragflächen 26.1, 26.2, 26.3, 26.4 des Außenringes 26 gebildet, die ebenfalls symmetrisch zueinander geneigt verlaufen. Zwischen den Tragflächen 25.1.1, 25.2.1, 26.1, 26.2 sind bei beiden Schrägnadellager 23, 24 angeordnet, die zu einander in O-Anordnung angestellt sind, d.h., deren Drucklinien verlaufen schräg von innen nach außen. Schließlich gehört das Federelement 27 in Form einer Tellerfeder zum erfindungsgemäß ausgebildeten Druckstück 21, wobei diese beidseitig angeordneten Federelemente 27 die beiden Hälften 25.1 und 25.2 der Führungsrolle 25 auf einander zu bewegen und diese über ihre Tragflächen 25.1.1, 25.2.1 die Lagernadeln 23.1, 24.1 gegen die inneren Tragflächen 26.1, 26.2 des Außenrings drücken. Somit ist in einfacher Weise in der Führungsrolleneinheit eine gewünschte Vorspannung einstellbar.

### Bezugszahlenliste

- 1: Gehäuse
- 2: Ritzel
- 3: Lenkspindel
- 4: Zahnstange
- 5: Druckstück
- 6: Deckel
- 7: Feder
- 8: Führungsrolle
- 9: Wälzlager
- 10: Tragachse
- 11: Tragfläche
- 12: Tragfläche
- 13: Zahnstange
- 13.1: Verzahnung
- 13.2: Ausnehmung
- 13.3: Tragfläche
- 13.4: Tragfläche
- 14: Druckstück
- 14.1: Teil
- 14.1.1: Laufbahn
- 14.2: Teil
- 14.2.1: Laufbahn
- 14.3: Nut
- 15: Befestigungsschraube
- 16: Schrägnadellager
- 16.1: Lagernadel
- 16.2: Käfig
- 16.3: Laufscheibe
- 17: Schrägnadellager
- 17.1: Lagernadel
- 17.2: Käfig
- 17.3: Laufscheibe
- 18: Feder
- 19: Führungsrolle
- 19.1: Rotationsachse
- 19.2: Tragfläche
- 19.3: Tragfläche
- 20: O-Ring
- 21: Druckstück
- 21.1: Nut
- 22: Befestigungsstift
- 23: Schrägnadellager
- 23.1: Lagernadel
- 23.2: Käfig
- 24: Schrägnadellager
- 24.1: Lagernadel
- 24.2: Käfig
- 25: Führungsrolle
- 25.1: Teil
- 25.1.1: Tragfläche
- 25.2: Teil
- 25.2.1: Tragfläche
- 25.3: Rotationsachse
- 26: Außenring
- 26.1: Tragfläche
- 26.2: Tragfläche
- 26.3: Tragfläche
- 26.4: Tragfläche
- 27: Federelement

## Patentansprüche

1. Zahnstangenlenkung für ein Kraftfahrzeug, mit einem Lenkgehäuse (1), in dem eine Zahnstange (13) längsverschieblich gelagert ist, sowie einem mit der Zahnstange (13) kämmenden Ritzel (2) und einem Druckstück (14, 21), das auf einer einer Eingriffsseite mit dem Ritzel (2) gegenüberliegenden Seite der Zahnstange (13) angeordnet ist und mit Hilfe einer Feder (7) in axialer Richtung gegen die Zahnstange (13) vorgespannt ist, wobei das Druckstück (14, 21) in seinem Inneren eine der Kontur der Zahnstange (13) angepasste, drehbare Führungsrolle (19, 25) mit einer Tragfläche aufweist, an der die Zahnstange (13) mit einer korrespondierenden Tragfläche anliegt, wobei die Tragflächen zueinander so angeordnet sind, dass ein Verdrehen der Zahnstange (13) in Umfangsrichtung verhindert ist, **dadurch gekennzeichnet, dass** die Tragfläche (13.3,13.4) als wenigstens eine innerhalb der kreisförmigen Zahnstange (13) liegende Ausnehmung (13.2) ausgebildet ist.

2. Zahnstangenlenkung nach Anspruch 1, **dadurch gekennzeichnet, dass** die Ausnehmung (13.2) der Zahnstange (13) halbkreisförmig ausgebildet ist.

3. Zahnstangenlenkung nach Anspruch 1, **dadurch gekennzeichnet, dass** die Ausnehmung (13.2) der Zahnstange V-förmig ausgebildet ist.

4. Zahnstangenlenkung nach Anspruch 1, **dadurch gekennzeichnet, dass** die Führungsrolle (19) über zwei in axialer Richtung voneinander beabstandete Schrägwälzlager gehalten ist.

5. Zahnstangenlenkung nach Anspruch 4, **dadurch gekennzeichnet, dass** die Schrägwälzlager als Schrägnadellager (16, 17, 23, 24) ausgebildet sind, die zueinander in X- oder in O-Anordnung angestellt sind.

6. Zahnstangenlenkung nach Anspruch 1, **dadurch gekennzeichnet, dass** die Führungsrolle (19) als ein rotationssymmetrischer Körper ausgebildet ist, der zu seiner Rotationsachse (19.1) symmetrisch geneigte Tragflächen (19.2, 19.3) aufweist, deren Verlängerungen sich in einem radial außen liegenden Punkt treffen.

7. Zahnstangenlenkung nach Anspruch 1, **dadurch gekennzeichnet, dass** das Druckstück (14) zweiteilig ausgebildet ist und durch eine Befestigungsschraube (15) oder einen Befestigungsstift (22) zusammengehalten ist.

8. Zahnstangenlenkung nach Anspruch 1, **dadurch gekennzeichnet, dass** das Druckstück (14,21) aus einem Kunststoff hergestellt ist.

9. Zahnstangenlenkung nach Anspruch 1, **dadurch gekennzeichnet, dass** beide Hälften (14.1, 14.2) des Druckstückes (14) eine Laufbahn für die von einander beabstandeten Schrägwälzlager in Form eines Einlegeteils (16.3, 17.3) bilden.

10. Zahnstangenlenkung nach Anspruch 1, **dadurch gekennzeichnet, dass** die Führungsrolle (25) als ein zweiteiliger rotationssymmetrischer Körper ausgebildet ist, der zu seiner Rotationsachse (25.3) symmetrisch geneigte Tragflächen (25.1.1, 25.2.1) aufweist, deren Verlängerungen sich in einem radial innen liegenden Punkt treffen, wobei der zweiteilige, rotationssymmetrisch ausgebildete Körper konzentrisch von einem Außenring (26) umschlossen ist, der korrespondierende, ebenfalls zur Rotationsachse (25.3) symmetrisch geneigte Tragflächen (26.1, 26.2, 26.3, 26.4) aufweist.

11. Zahnstangenlenkung nach Anspruch 10, **dadurch gekennzeichnet, dass** der zweiteilige rotationssymmetrisch ausgebildete Körper beidseitig von einem Federelement (27) mit einer axialen Kraft beaufschlagt ist.

12. Zahnstangenlenkung nach Anspruch 1, **dadurch gekennzeichnet, dass** das Druckstück (14,21) an seiner Mantelfläche mit einer umlaufenden Ausnehmung (14.3, 21.1) versehen ist, in die ein O-Ring (20) eingesetzt ist.
